# EUROPÄISCHE PATENTSCHRIFT

(11) **EP 0 537 564 B1**
(45) Veröffentlichungstag und Bekanntmachung des Hinweises auf die Patenterteilung: **06.03.1996**
(21) Anmeldenummer: 92116825.8
(22) Anmeldetag: 01.10.1992
(51) Int. Cl.: G09G 5/00, G05B 19/408

(54) **Werkzeugmaschinensteuerung mit Bildschirmausgabe**
Tool machine control with screen output
Commande de machine-outil avec sortie sur écran

(30) Priorität: 14.10.1991 DE 9112779 U
(43) Veröffentlichungstag der Anmeldung: 21.04.1993
(73) Patentinhaber: SIEMENS AKTIENGESELLSCHAFT, D-80333 München (DE)
(72) Erfinder: Kliemen, Hans-Uwe, Dipl.-Ing., W-8551 Röttenbach (DE); Pinno, Dieter, Dipl.-Ing., W-8520 Erlangen (DE)

(56) Entgegenhaltungen:
- EP-A- 0 262 548
- EP-A- 0 281 677
- DE-A- 3 729 023
- US-A- 3 792 462

## Beschreibung

Die Erfindung bezieht sich auf eine Werkzeugmaschinensteuerung mit Bildschirmausgabe.

Ein großer Teil der Bilder für die Werkzeugmaschinensteuerung besteht aus wiederkehrenden gleichen Bildteilen. Auch Bilder, die sich nur geringfügig unterscheiden, müssen wiederholt vollständig erstellt werden. Das hat den Nachteil, daß eine Änderung oft in vielen Bildern parallel durchgeführt werden muß und unnötigerweise Speicherplatz mit identischen Inhalten belegt wird. Ein weiteres Problem besteht darin, daß je Bild nur eine Cursorbearbeitung möglich ist. Diese Beschränkung auf einen Cursor macht es z.B. nicht möglich, Eingabemasken mit Listen zu verbinden, von denen meist nur ein Ausschnitt sichtbar ist, der durch Cursorbewegungen ausgewählt wird.

Die EP-A-0 281 677 offenbart eine Anordnung zum gleichzeitigen Darstellen von mehreren Bildern auf dem Bildschirm eines Sichtgerätes. Diese Bilder werden in der Form von mehreren aneinander grenzenden Fenstern dargestellt, wobei jedem Fenstern ein eigener Speicher zugeordnet ist.

Die Aufgabe der vorliegenden Erfindung besteht darin, diese eingangs geschilderten Nachteile zu vermeiden und einen einfachen Bildaufbau möglich zu machen.

Diese Aufgabe wird bei einer Werkzeugmaschinensteuerung mit Bildschirmausgabe von Steuerungsinformationen durch folgende Merkmale gelöst:
a) es sind eine Reihe von Teilbildern in einem gemeinsamen Teilbildspeicher gespeichert, auch wenn sie nicht gleichzeitig am Bildschirm angezeigt sind,
b) das in einem Bildspeicher speicherbare Gesamtbild für die Anzeige am Bildschirm ist rechnerseitig aus Teilbildern zusammensetzbar und
c) jedes Teilbild ist mit eigenem Cursor gesondert bearbeitbar.

Durch die vorstehend geschilderte Funktion der Unterbildbeschreibung brauchen wiederkehrende gleiche Bildteile nur einmal als Unterbild erstellt werden. Sie können dann in verschiedenen Bildern angezeigt werden. Hierdurch vermindert sich der benötigte Speicherplatz sowie der Arbeitsaufwand zur Bilderstellung bzw. Bildänderung. Da jedes Unterbild eine eigene Cursorbearbeitung hat, entfällt auch die Beschränkung auf einen Cursor.

Anhand eines in der Zeichnung dargestellten Ausführungsbeispiels sei die Erfindung näher erläutert; es zeigen:
- FIG 1: den schematischen Aufbau einer Programmierstation für eine Werkzeugmaschinensteuerung,
- FIG 2: den Aufbau von zwei Bildern aus verschiedenen Unterbzw. Teilbildern,
- FIG 3: die Zusammensetzung der Bilder aus Teil- und Unterbildern.

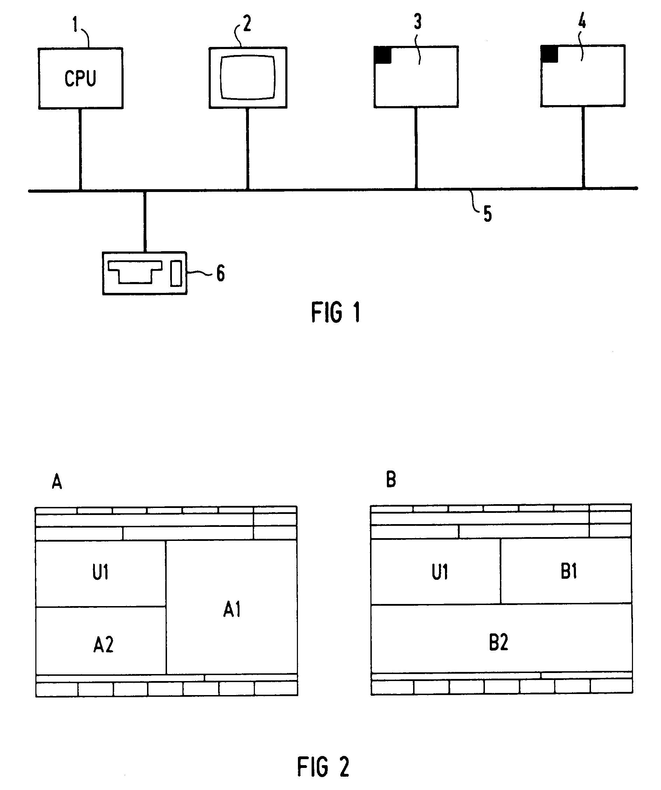

Wie FIG 1 grob schematisch erkennen läßt, ist ein Monitor 2 als Teil einer Workstation zusammen mit einem Rechner 1 an ein gemeinsames Bussystem 5 angeschlossen. In den Rechner sind durch eine Eingabevorrichtung 6, z.B. eine Tastatur oder eine Maus, entsprechende Werte eingebbar. Zur Verdeutlichung der Erfindung sind ferner noch gesondert Speicher 3 und 4 am Bus 5 angeordnet, von denen im Speicher 3 Teil- und Unterbilder gespeichert sind und im Speicher 4 die durch den Rechner 1 zusammengesetzten Gesamtbilder gespeichert sind. Die vorstehende Anordnung ist nur verständnishalber gewählt; so sind Monitor 2 und Tastatur 6 in der Praxis über Anschaltbaugruppen, die der Übersichtlichkeit halber nicht dargestellt sind, an den Bus 5 angeschlossen. In der Praxis wird je nach den Erfordernissen zu bestimmten Zeitpunkten das anzuzeigende Bild zusammengestellt.

FIG. 2 läßt die Struktur zweier am Monitor 2 zur Anzeige zu bringenden Bilder Bild A und Bild B erkennen. Wie ersichtlich, besteht das Bild A aus Unterbild U1 und den Teilbildern A1 und A2. Das Bild B besteht aus Unterbild U1, Teilbild B1 und Teilbild B2. Wie aus den gleichen Bezeichnungen ersichtlich, soll dadurch zum Ausdruck gebracht werden, daß in beiden Bildern A und B die Unterbilder U1 identisch sind. Es genügt daher, dieses Bild einmal zur Verfügung zu haben. Wie ersichtlich, wird also das Bild A bzw. das Bild B im Speicher 4 aus den Bildern U1, A1 und A2 bzw. U1, B1 und B2 zusammengesetzt. Hierbei wird das Bild U1, das ebenfalls mit den anderen Bildern im Speicher 3 steht, zweimal verwendet. Hierdurch kann Speicherplatz eingespart werden.

Jedes der gezeigten Unter- bzw. Teilbilder ist dann auch gesondert mit einem Cursor bearbeitbar.

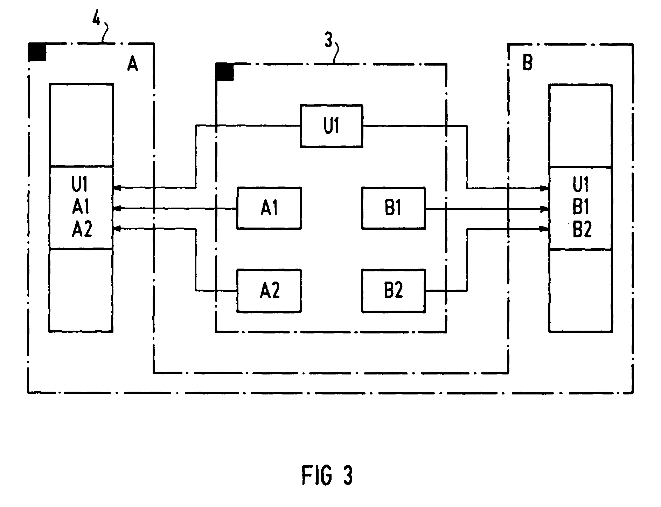

In der Darstellung gemäß FIG 3 ist die Zusammensetzung der im Speicher 3 abgelegten Teil- und Unterbilder A1, A2, B1, B2 und U1 zu Gesamtbildern im Speicher 4 in Form eines Flußbildes gezeichnet. Die dabei verwendeten Bezugszeichen entsprechen denjenigen der Figuren 1 und 2.

## Patentansprüche

1. Werkzeugmaschinensteuerung mit Bildschirmausgabe von Steuerungsinformationen, bei der
a) eine Reihe von Teilbildern (A1,A2,U1,B1,B2) in einem gemeinsamen Teilbildspeicher (3) gespeichert sind, auch wenn sie nicht gleichzeitig am Bildschirm (2) angezeigt sind,
b) das in einem Bildspeicher (4) speicherbare Gesamtbild (A,B) für die Anzeige am Bildschirm (2) durch ein Rechenwerk (1) aus Teilbildern (A1,A2,U1 bzw.B1,B2,U1) zusammensetzbar ist und
c) jedes Teilbild (A1,A2,U1,B1,B2) mit eigenem Cursor gesondert bearbeitbar ist.

## Claims

1. Machine tool control with screen display of control information, wherein
a) a series of partial images (A1, A2, U1, B1, B2) is stored in a common partial image memory (3), even if said partial images are not simultaneously displayed on the screen (2),
b) the total image (A, B), which can be stored in an image memory (4), for display on the screen (2) can be put together out of partial images (A1, A2, U1 and B1, B2, U1 respectively) by means of an arithmetic unit (1), and
c) each partial image (A1, A2, U1, B1, B2) can be processed separately with a cursor peculiar thereto.

## Revendications

1. Unité de commande de machine-outil avec affichage d'informations de commande sur un écran, dans laquelle
a) une série d'images (A1,A2,U1,B1,B2) partielles sont mémorisées dans une mémoire (3) commune d'images partielles, même lorsqu'elles ne sont pas affichées simultanément sur l'écran (2),
b) l'ensemble de l'image (A,B), pouvant être mémorisé dans une mémoire (4) d'images et destiné à être affiché sur l'écran (2), peut être recomposé à partir des images partielles (A1,A2,U1 ou B1,BL,U1) par une unité de calcul (1), et
c) chaque image (A1,A2,U1,B1,B2) partielle peut être traitée séparément par un curseur qui leur est propre.
